# EUROPEAN PATENT SPECIFICATION

(11) **EP 3 350 724 B1**
(45) Date of publication and mention of the grant of the patent: **21.07.2021**
(21) Application number: 16778926.2
(22) Date of filing: 14.09.2016
(51) Int. Cl.: G06F 16/957

(54) **SYSTEMS AND METHODS FOR DETERMINING APPLICATION ZOOM LEVELS**
SYSTEME UND VERFAHREN ZUR FESTLEGUNG VON ANWENDUNGSZOOMSTUFEN
SYSTÈMES ET PROCÉDÉS DE DÉTERMINATION DE NIVEAUX DE ZOOM D'APPLICATION

(30) Priority: 15.09.2015 US 201562219080 P
(43) Date of publication of application: 25.07.2018
(73) Proprietor: Google LLC, Mountain View, CA 94043 (US)
(72) Inventor: MACLEAN, Wallace James, Kitchener, Ontario N2G 1H6 (CA)
(74) Representative: Betten & Resch
(86) International application number: PCT/US2016/051773
(87) International publication number: WO 2017/048869

(56) References cited:
- WO-A2-2010/064849
- US-A1- 2005 071 364
- US-A1- 2009 303 253
- US-A1- 2011 258 563
- US-A1- 2015 046 802
- US-A1- 2015 121 210

## Description

### CROSS-REFERENCE TO RELATED APPLICATION

The present application claims the benefit of U.S. Provisional Patent Application No. 62/219,080, entitled "Systems and Methods for Determining Application Zoom Levels", filed on September 15, 2015.

### BACKGROUND

The present disclosure generally relates to content display and, in particular, for example, to systems and methods for determining application zoom levels.

Applications may be run on a computing device of a user and utilized to display content. For example, a web browser application may be run on the computing device and utilized to navigate the Internet and display a web page. The user may manually set a zoom level for displaying the web page. When the user navigates to another web page, the user may need to manually set the zoom level to a different value for viewing this new web page, since the previously set zoom level may not be appropriate to the user for viewing this new web page. Although the user may manually adjust the zoom level when viewing different web pages, such manual adjustments to the zoom level may adversely affect the user's online experience.

FLAKE ET AL. describes in US2009/303253 A1 a system and/or a method that facilitates rendering of a portion of viewable data, wherein web page, a user interface or other displayable information can be personalized such that disparate portions of the displayable information are rendered at varying scales, resolutions, sizes, etc. Therein, a personalizer can generate personalization data related to a user. Further therein, the personalization data can include a display property associated with a portion of viewable data. In addition, a display engine is provided that displays the portion of viewable data based upon the personalization data and display property.

### SUMMARY

Aspects of the subject technology relate to a system, method and non-transitory machine-readable medium as set out in the attached independent claims.

Further aspects of the invention are defined in the accompanying dependent claims.

It is understood that other configurations of the subject technology will become readily apparent to those skilled in the art from the following detailed description, where various configurations of the subject technology are shown and described by way of illustration. As will be realized, the subject technology is capable of other and different configurations and its several details are capable of modification in various other respects, all without departing from the scope of the subject technology. Accordingly, the drawings and detailed description are to be regarded as illustrative in nature and not as restrictive.

### BRIEF DESCRIPTION OF THE DRAWINGS

The accompanying drawings, which are included to provide further understanding and are incorporated in and constitute a part of this specification, illustrate disclosed aspects and together with the description serve to explain the principles of the disclosed aspects.
FIG. 1 illustrates an example network environment for facilitating adaptive setting of zoom levels for displaying web pages in accordance with the subject technology.
FIG. 2 shows a flow diagram illustrating an example process to facilitate adaptive setting of zoom level for displaying web pages in accordance with one or more implementations.
FIG. 3 shows a flow diagram illustrating an example process to facilitate adaptive setting of zoom level for displaying web pages in accordance with one or more implementations.
FIGS. 4A and 4B show a sequence of web client interfaces and their respective display areas that illustrates different zoom levels set for different portions of a web page in accordance with one or more implementations.
FIG. 5 conceptually illustrates an example electronic system with which some implementations of the subject technology can be implemented.

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, the subject technology is not limited to the specific details set forth herein and may be practiced without these specific details. In some instances, structures and components are shown in block diagram form in order to avoid obscuring the concepts of the subject technology.

The subject technology provides systems and methods for facilitating adaptive and automated setting of zoom levels for displaying application content The application content may be associated with web-based applications, mobile applications, and/or desktop applications. For example, the application content may include web pages. The zoom levels may be set based on characteristics of content contained in the web pages and/or preferences of the user. The web pages may be viewed at the set zoom levels in a web client application (e.g., web browser application) running on a computing device of the user. The setting of the zoom levels may be automated such that the application content is displayed by a computing device (e.g., in the web client application) at the adaptively set zoom levels without manual intervention from the user. The user provides feedback to the subject technology when the user adjusts the zoom level set by the subject technology for displaying a given web page. In such cases, the subject technology may adjust the user preferences based on the received feedback and utilize the adjusted user preferences for setting zoom levels for subsequent web pages viewed by the user.

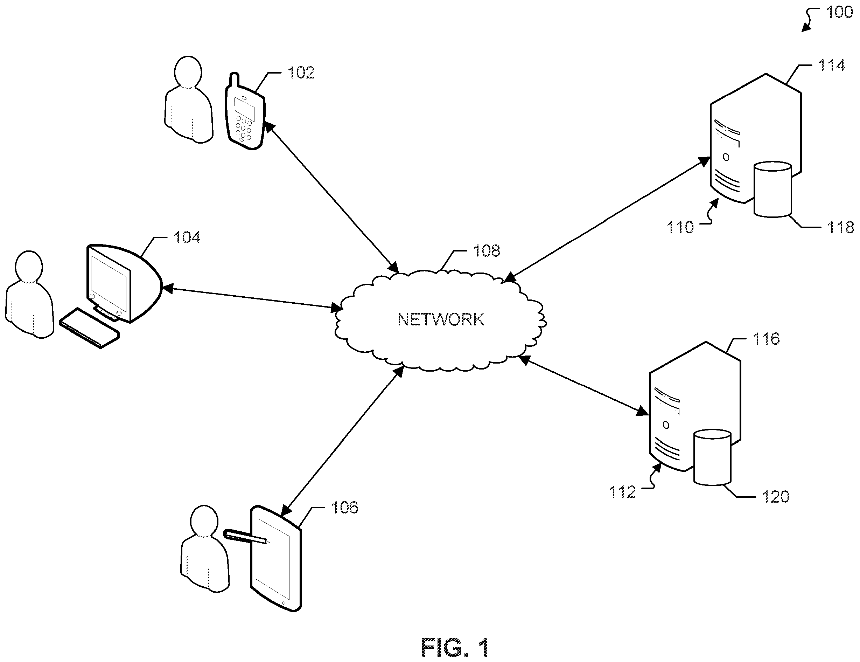

FIG. 1 illustrates an example network environment 100 for facilitating adaptive setting of zoom levels for displaying web pages in accordance with the subject technology. The network environment 100 includes computing devices 102, 104, and 106 (hereafter "102-106") and computing systems 110 and 112 (hereafter "110-112"). Computing devices 102-106 and computing systems 110-112 can communicate with each other through a network 108. Each of computing systems 110-112 can include one or more servers 114 and 116 and one or more data stores 118 and 120. In some aspects, the network environment 100 can have more or fewer computing devices (e.g., 102-106) and/or computing systems (e.g., 110-112) than those shown in FIG. 1.

Each of the computing devices 102-106 can represent various forms of processing devices that have a processor, a memory, and communications capability. The computing devices 102-106 may communicate with each other, with the computing systems 110-112, and/or with other systems and devices not shown in FIG. 1. By way of non-limiting example, processing devices can include a desktop computer, a laptop computer, a handheld computer, a personal digital assistant (PDA), a cellular telephone, a network appliance, a camera, a smart phone, an enhanced general packet radio service (EGPRS) mobile phone, a media player, a navigation device, an email device, a game console, or a combination of any of these processing devices or other processing devices.

In example aspects, any of the computing devices 102-106 may execute computer instructions to run a web client application (e.g., a web browser application) and to display a web page in the web client application. The computing devices 102-106 may locally store user preferences associated with zoom levels for displaying web pages. The web client application may request web documents associated with the web page and render the web documents in order to display the web page. The web documents may include HyperText Markup Language (HTML) documents and associated style sheets, such as Cascading Style Sheets (CSSs). For example, any of the computing devices 102-106 may request the web documents associated with the web page from a web host server that hosts a website that contains the web page. The web documents may also include documents associated with other markup languages including, but not limited to, Extensible HyperText Markup Language (XHTML) and Extensible Markup Language (XML).

The computing devices 102-106 determine and set zoom levels based on content characteristics associated with the web page and a user's preferences. The computing devices 102-106 can display the web page in a view window of the web client application, where the view window is displayed on a respective display device (e.g., screen, monitor) associated with the computing devices 102-106. In some aspects, any of the computing devices 102-106 may be associated with multiple display devices.

Each of the computing systems 110-112 may be any system or device having a processor, a memory, and communications capability. In some example aspects, any of the computing systems 110-112 can be a single server (e.g., 114). In other implementations, any of the computing systems 110-112 can represent more than one computing device working together to perform the actions of a computer server (e.g., cluster of machines). Further, any of the computing systems 110-112 can represent various forms of servers including, but not limited to, a web server, an application server, a proxy server, a network server, or a server farm. The computing systems 110-112 can represent various types of computing environments and architectures, in which different types of instructions are executed by components of the computing systems 110-112.

In example aspects, the computing system 110 may execute computer instructions to host a website that provides one or more web pages. Each of the web pages may be associated with web documents (e.g., HTML documents, CSS sheets). A user of any of the computing devices 102-106 can enter a request for a web page of the website hosted by the computing system 110. The computing system 110 can provide the web page (e.g., provide the web documents) to the computing device 102-106 that entered the request. One or more web pages of the website can be displayed on a display device of the computing device 102-106 that receives the web pages. In such cases, the one or more web pages displayed on the computing device 102-106 are remotely retrieved from the computing system 110. In some aspects, the one or more web pages are not limited to website data remotely retrieved from the computing system 110 by the computing device 102-106. The website data may be retrieved from local memory of the computing devices 102-106 in addition to or alternative to the website data retrieved remotely. In some aspects, the computing system 110 can include one or more servers 114, where use of more than one server may facilitate load balancing between the servers.

In example aspects, the computing system 112 may execute computer instructions to facilitate adaptive setting of zoom levels for displaying web pages. The computing system 112 may be associated with an online service, such as an email service and/or a social network service, among other online services. When a user creates an online account for the online service, the computing system 112 may allow the user to store preferences associated with zoom levels on the computing system 112 (e.g., the data store 120) and/or on a computing system (not shown) associated with the online service. The user preferences associated with zoom levels may be adjusted and stored as the user performs online activities associated with the user account (e.g., checking emails, consuming social network posts) and/or performs other online activities (e.g., browsing activities) when the user is logged into the user account.

The computing system 112 may also allow synchronization of the user preferences with computing devices (e.g., smartphones, tablets, desktop computers) that are designated by the user and/or computing systems associated with the online service that are designated by the user. Synchronization of the user preferences stored on the computing device 102 with those stored on the computing system 112 may be initiated when the user logs into the online account using the computing device 102. Synchronization of the user preferences stored on other computing devices designated to allow synchronization by the user with those stored on the computing system 112 may also be initiated when the user logs into the online account using these other computing devices. The users may be provided with options to allow the users to set whether or not to synchronize the user preferences stored in a computing device of the user (e.g., the computing device 102) with the computing system 112 and/or other computing devices and computing systems.

In some aspects, the computing devices, including 102-106, and computing systems, including 110-112, may communicate wirelessly through a communication interface (not shown), which may include digital signal processing circuitry where necessary. For example, a computing device (e.g., 102) may communicate with another computing device (e.g., 104) and/or a computing system (e.g., 110), and a computing system (e.g., 110) may communicate with another computing system (e.g., 112) and/or a computing device (e.g., 102). The communication interface may provide for communications under various modes or protocols, for example, Global System for Mobile (GSM) communication voice calls, Short Message Service (SMS), Enhanced Messaging Service (EMS) or Multimedia Messaging Service (MMS) messaging, Code Division Multiple Access (CDMA), Time Division Multiple Access (TDMA), Personal Digital Cellular (PDC), Wideband Code Division Multiple Access (WCDMA), CDMA2000, or General Packet Radio System (GPRS), among others. For example, the communication may occur through a radio-frequency transceiver (not shown). In addition, short-range communication may occur, for example, using a Bluetooth, WiFi, or other such transceiver.

In some aspects, the network environment 100 can be a distributed client/server system that spans one or more networks such as, for example, the network 108. The network 108 can be a large computer network such as, for example, a local area network (LAN), wide area network (WAN), the Internet, a cellular network, or a combination thereof connecting any number of mobile clients, fixed clients, and servers. Further, the network 108 can include, but is not limited to, any one or more of the following network topologies, including a bus network, a star network, a ring network, a mesh network, a star-bus network, tree or hierarchical network, and the like. In some aspects, communication between each client (e.g., computing devices 102-106) and server (e.g., computing systems 110-112) can occur via a virtual private network (VPN), Secure Shell (SSH) tunnel, or other secure network connection. In some aspects, network 108 may further include a corporate network (e.g., intranet) and one or more wireless access points.

In situations in which the systems discussed here collect personal information about users, or may make use of personal information, the users may be provided with an opportunity to control whether programs or features collect user information (e.g., information about a user's social network, social actions or activities, browsing activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, zip code, or state level), so that a particular location of a user cannot be determined. Thus, the user may have control over how information is collected about the user and used by a content server.

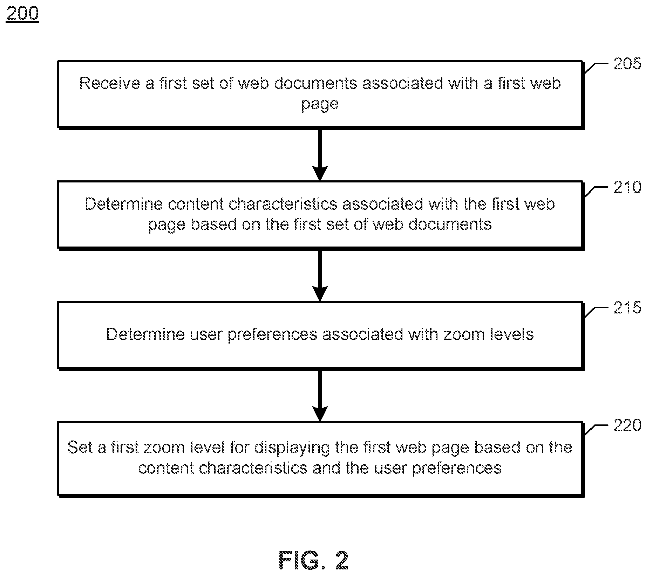

FIG. 2 shows a flow diagram illustrating an example process 200 to facilitate adaptive setting of zoom level for displaying web pages in accordance with one or more implementations. The steps of the example process 200 do not need to be performed in the order shown. It is understood that the depicted order is an illustration of one or more example approaches, and is not meant to be limited to the specific order or hierarchy presented. The steps can be rearranged, and/or two or more of the steps can be performed simultaneously. For explanatory purposes, the example process 200 is described herein with reference to the computing device 102, computing system 110 (e.g., the web host server), and computing system 112 of the example network environment 100 of FIG. 1; however, the example process 200 is not limited to the computing device 102, computing system 110, and computing system 112.

At block 205, the computing device 102 receives a set of web documents associated with a first web page. The set of web documents may be received by the computing device 102 from the computing system 110 (e.g., the web host server). The computing system 110 may provide the set of web documents to the computing device 102 upon the computing system 110 receiving a request from the computing device 102 for the first web page. A user of the computing device 102 may cause the request for the first web page to be sent to the computing system 110 by clicking a link to the first web page or providing a universal resource locator (URL) of the first web page to a web client application (e.g., a web browser application) executed on the computing device 102 for example. The set of web documents may include documents that, when rendered by the web client application, allow display of the first web page. For example, the set of web documents may include HTML documents and associated style sheets (e.g., CSS). Display of the first web page may be provided to the user on one or more display devices associated with the computing device 102.

At block 210, the computing device 102 determines characteristics of content associated with the first web page based on the set of web documents. The set of web documents may contain information associated with content contained in the first web page. By way of non-limiting example, the content contained in the first web page may include text, graphics, links, scripts, and so forth. Layout of the content contained in the first web page may include font type, size, and/or color and distribution thereof throughout the first web page; paragraph and/or column layout; image location and/or size; white space location and/or amount; and so forth. As an example, text contained in the first web page may be presented in a multi-column format As another example, white space may be present along the left and right edges of the first web page. Presence of such white space along the left and right edges may be indicative of the first web page using a fixed-width design. The set of web documents may include, for example, elements (e.g., HTML elements) and rules (e.g., CSS rules) that specify the content contained in the first web page and/or specify how to present or layout the content contained in the first web page.

In one or more implementations, the computing device 102 determines the content characteristics based on an analysis of the set of web documents. The analysis may include parsing the set of web documents to identify the content and/or the layout of the content Once the content and/or the layout of the content are identified, the content and/or the layout of the content may be represented in a format that is utilizable by the computing device 102 (e.g., a web browser application running on the computing device 102) to allow display of the first web page. Alternatively or in addition, in one or more implementations, the computing system 112, or other computing device(s) or computing system(s), may perform the analysis of the set of web documents and determine the content characteristics based on the analysis. The computing system 112 may provide information associated with the content characteristics and/or the analysis to the computing device 102.

The content characteristics may be based on an analysis of a document object model (DOM) of the set of web documents. The DOM is a cross-platform and language-independent convention for representing and interacting with objects in web documents. For HTML documents, the objects generally include HTML elements contained in the HTML documents. To perform the DOM analysis, the web client application may parse the set of web documents, which may include HTML document(s) and any associated style sheet(s), to generate a DOM representation associated with the first web page. The DOM representation may be, or may include, a DOM tree. Nodes of the DOM tree are formed of the elements of the HTML document(s), where each element has a start tag, an end tag, and content related to the element (e.g., content between the start and end tags of the element). The nodes of the DOM tree may be associated with style rules contained in the associated style sheet(s). Accordingly, content and layout of the content of the first web page may be represented by the DOM representation.

The DOM analysis may be utilized to determine the content characteristics associated with the first web page, including font size distribution on the first web page, number of columns on the first web page, unused white space at the edges of the first web page, size/placement of images on the first web page, etc. The DOM representation (e.g., the DOM tree) of the first web page may be stored in the computing device 102 for later retrieval to allow faster reproduction of the first web page, such as in subsequent visits by the user to the first web page. The computing device 102 may update the DOM representation of the first web page when the first web page is changed. Although the DOM analysis and DOM representation are described with reference to the first web page, description associated with the DOM analysis and DOM representation also applies to other web pages.

The DOM representation may be constructed as the set of web pages is being parsed by the computing device 102. In some aspects, to allow content of the first web page to be displayed to the user with minimal wait time from the user's request for the first web page, the web client application may allow display of the first web page as the set of web documents is being parsed, rather than waiting for an entirety of the set of web documents to be parsed prior to allowing display of the first web page. The computing device 102 may download the set of web documents from the computing system 110 and locally store the set of web documents in the computing device 102. The web client application running on the computing device 102 may retrieve the set of web documents locally stored in the computing device 102, parse the set of web documents, and allow display of the first web page as the set of web documents is being parsed.

Although the foregoing description has been made with reference to a DOM representation, other ways by which to represent content and/or layout of the content associated with the set of web documents may be utilized. The representation may be in any format that is utilizable by the computing device 102 to allow display of the first web page.

In one or more implementations, the computing device 102 may determine content characteristics based on image content analysis of image content contained in the first web page. Alternatively or in addition, the image content analysis may be performed by an image content analysis service remote to the computing device 102. The image content analysis service may be provided by the computing system 112 and/or an image content analysis server not shown in the network environment 100 of FIG. 1. For example, the image content analysis may be utilized to detect objects represented in the image content contained in the first web page, such as human or animal faces, scenery (e.g., bodies of water, mountains, forests, etc.), buildings, and so forth.

At block 215, the computing device 102 determines user preferences associated with zoom levels. The user preferences may be stored, for example, locally in the computing device 102 and/or remotely (e.g., in the computing system 112). The user preferences may be determined based on prior browsing activities and user input associated with zoom levels in relation to the prior browsing activities. The prior browsing activities may include prior web pages visited by the user prior to the user visiting the first web page. In providing user input, the user input may include the user manually setting zoom levels for displaying the web pages. For example, if the user sets a zoom level that causes physical size of text for one or more web pages to be larger than a certain size, the computing device 102 may determine the user preferences in relation to the physical size of text based on the user's manually setting the zoom level. In some aspects, the user may manually set user preferences to be applied to web pages visited by the user through options provided to the user (e.g., by the web client application), such as an option provided to the user to allow the user to set the user's preference regarding text size displayed to the user. Although the foregoing provides text size as an example, user preferences for setting zoom levels in relation to other content characteristics aside from text size may also be determined based on content characteristics associated with prior browsing activities and user input associated with zoom levels in relation to the prior browsing activities.

The user preferences associated with various content characteristics may be classified into respective levels of importance associated with the various content characteristics. For example, a given content characteristic may be classified into one of a "high importance," "medium importance," and "low importance" level. As another example, a given content characteristic may be classified using a numerical scale, such as 1 for "lowest importance" and 5 for "highest importance." Other ways by which to represent the level of importance of a given content characteristic may be utilized.

A respective level of importance may be associated with content characteristics such as font size, font size distribution, amount and location of white space on the web page, size and placement of images on the web page, content of the images, and so forth. A respective importance may also be applied to individual physical sizes of the font size, such that a font size associated with a certain physical size may be associated with one level of importance whereas a font size associated with another physical size may be associated with another level of importance.

Content characteristics associated with higher levels of importance may have a larger impact on a zoom level that is determined and set by the computing device 102 for displaying the first web page, whereas content characteristics associated with lower levels of importance may have a smaller impact or no impact. The level of importance associated with the content characteristics may also be indicative of whether a higher zoom level or a lower zoom level should be utilized in relation to presence or absence of the content characteristics.

In one or more implementations, the user preferences may be based on eye tracking technology. In a case where the user allows the user's eye movements on the user's display device(s) to be analyzed, the preferences may be based on the content characteristics that are determined to catch the user's attention (e.g., images of humans, captions under images, white space along sides of the first web page, etc.) as well as those that are determined not to catch the user's attention. Whether the content characteristics that catch the user's attention cause the user to reduce a set zoom level, increase a set zoom level, or not change a set zoom level may be utilized to determine the preferences of the user in relation to these content characteristics. A level of importance associated with the content characteristics may be based on information obtained from eye tracking technology.

In some aspects, the user may be provided with options (e.g., by the web client application) for manually setting aspects of the user preferences and/or otherwise provide information pertaining to the user preferences. For example, the user may provide a distance between the user and one or more of the user's display devices and/or may provide a level of importance pertaining to one or more content characteristics.

The foregoing content characteristics, such as font size, font size distribution, etc., may be part of a predetermined set of content characteristics that are utilized to determine user preferences and zoom levels. In one or more implementations, the user preferences may be based on machine learning. Using machine learning, based on user feedback (e.g., manual adjustment of a set zoom level), the computing device 102 may identify additional content characteristics that may affect the zoom levels desired by the user. The computing device 102 may identify patterns, colors, or combination thereof, among other content characteristics outside of the predetermined set of content characteristics, that should be factored into the zoom level desired by the user. For example, through machine learning, the computing device 102 may identify that hash marks and dot patterns consistently cause the user to adjust a zoom level set by the computing device 102 such that the user has a closer view of the hash marks and dot patterns. The computing device 102 may then adjust the user preferences associated with the additional content characteristics based on subsequent user feedback.

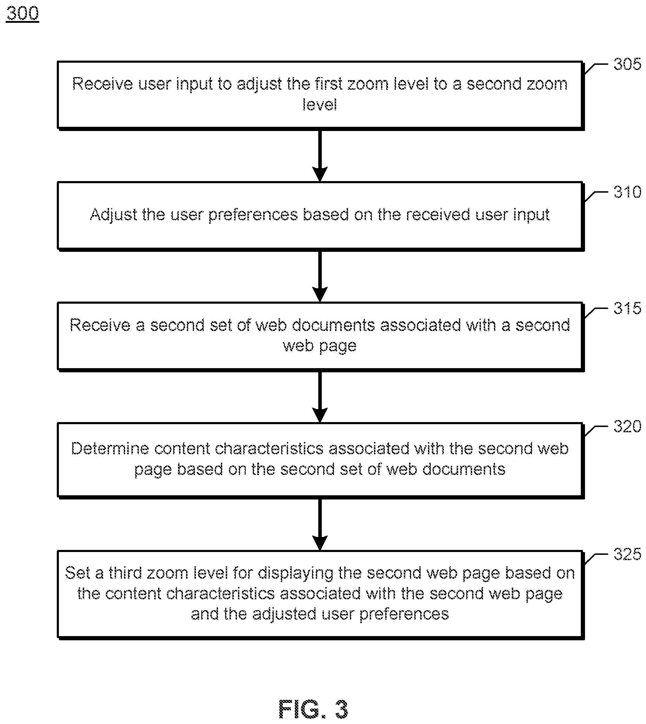

The user preferences associated with zoom levels, such as the level of importance associated with the content characteristics, may be based on user feedback associated with zoom levels set by the computing device 102. The user feedback may be from the user adjusting a zoom level set by the computing device 102 for example. As will be discussed with reference to FIG. 3, the computing device 102 may determine and adjust the user preferences, such as adjusting the level of importance associated with the content characteristics, based on user input to change a zoom level set by the computing device 102. The adjustment of the user preferences allows the computing device 102 to adapt to and learn preferences of the user, such that subsequent zoom levels set by the computing device 102 are made based on the adjusted user preferences. As additional user input is received, the frequency with which the user adjusts the zoom levels set by the computing device 102 may be reduced.

The user preferences may also include a viewing environment of the user. The viewing environment of the user may include the number of display devices (e.g., screens, monitors) that are being utilized by the user, a size and resolution of the display device(s) utilized by the user, distance between the user and the display device(s), and so forth. For example, the computing device 102 may include one or more built-in display devices and/or one or more external display devices (e.g., high-definition multimedia interface (HDMI) monitor, DisplayPort monitor, etc.) connected to or otherwise accessible to the computing device 102. The distance between the user and the display device(s) may be provided by the user and/or may be determined by the display device(s) (e.g., smart monitors).

At block 220, the computing device 102 sets a first zoom level for displaying the first web page based on the content characteristics and the user preferences. The computing device 102 may provide the first web page for display at the first zoom level in the web client application.

The computing device 102 may determine the first zoom level by associating presence or absence of the content characteristics with the user preferences. Based on prior browsing activities and associated zoom levels utilized for the browsing activities, for example, the user preferences may indicate that the user does not change the zoom level of the web client so long as the physical size of the text on the web page is visible and sufficiently large for the user. In such cases, the computing device 102 may set the first zoom level of the web client application such that text of a given web page is of a physical size that has historically been sufficiently large for the user. The physical size of text that is sufficiently large may be a minimum text size for which the user does not change the zoom level of the web client

In such a case, for example, the user preferences may indicate that displaying text with physical sizes of greater than 2 millimeters is of "high importance" whereas other content characteristics are associated with lesser importance. The computing device 102 may set the first zoom level such that the physical sizes of the text as provided for display to the user are generally at least 2 millimeters. As another example, the user preferences may indicate that displaying text with physical sizes of greater than 2 millimeters and less than 6 millimeters is of "high importance" whereas other content characteristics are associated with lesser importance. The computing device 102 may set the first zoom level such that the physical sizes of the text as provided for display to the user are generally somewhere between 2 millimeters and 6 millimeters.

As another example, with regard to image content on the first web page, the user preferences may indicate that the user sets web pages to a higher zoom level (e.g., 150%) when the web pages contain images of humans or animals whereas the user keeps the web pages at a lower zoom level (e.g., 100%) when the web pages do not contain images or contain images without humans or animals. The image content analysis may allow for recognition of human or animal faces in an image, and results of such image content analysis may be utilized in setting the zoom level for the web pages. The first zoom level that is set may be based on physical sizes of the human or animal faces as provided for display to the user. For example, the user preferences may indicate that displaying human or animal faces with physical sizes of greater than 3 centimeters along at least one dimension is of "high importance" whereas other content characteristics are associated with lesser importance. The computing device 102 may set the first zoom level such that the human or animal faces as provided for display to the user are generally greater than 3 centimeters along at least one dimension.

In one or more implementations, the computing device 102 may determine and set additional zoom levels for displaying the first web page based on the content characteristics and the user preferences. For example, the computing device 102 may be associated with a built-in display device and an external display device connected to or otherwise associated with the computing device 102. The first zoom level may be set for the built-in display device (e.g., monitor) of the computing device 102. The computing device 102 may determine and set an additional zoom level for the external display device.

The zoom level set for displaying the first web page on the built-in display device may be different from that for the external display device, since the size and/or resolution of the display devices may be different. In some cases, the computing device 102 may set the zoom levels of the built-in display device and the external display device such that the content (e.g., textual content, graphical content) appear to be the same size or nearly the same size on both display devices. In some cases, the zoom levels set for each of the display devices may take into consideration the relative distances between the user and the display devices.

FIG. 3 shows a flow diagram illustrating an example process to facilitate adaptive setting of zoom level for viewing web pages in accordance with one or more implementations. The steps of the example process 300 do not need to be performed in the order shown. It is understood that the depicted order is an illustration of one or more example approaches, and is not meant to be limited to the specific order or hierarchy presented. The steps can be rearranged, and/or two or more of the steps can be performed simultaneously. For explanatory purposes, the example process 300 may be performed after the example process 200 of FIG. 2. Furthermore, the example process 300 is described herein with reference to the computing device 102, computing system 110 (e.g., the web host server), and computing system 112 of the example network environment 100 of FIG. 1; however, the example process 300 is not limited to the computing device 102, computing system 110, and computing system 112.

At block 305, the computing device 102 receives user input to adjust the zoom level set for displaying the first web page from the first zoom level to another zoom level. The user input may include manual adjustment, by the user, from the first zoom level set by the computing device 102 to a different zoom level. The user input may be considered feedback to the zoom level that the computing device 102 set at block 220 for displaying the first web page. For example, the user input may include the user accessing a menu associated with the web client and changing the zoom level using the menu. As another example, the user input may include a user performing a predetermined action that causes adjusting of the zoom level, such as a user pressing a key or combination of keys on a keyboard or a user pressing the Ctrl button on a keyboard while scrolling a wheel of a mouse. In a case that the web page is displayed on a touchscreen display device associated with the computing device 102, a user may provide, by way of non-limiting example, a pinch gesture or a tap gesture (e.g., double tap gesture, triple tap gesture) to adjust the zoom level. Other actions to adjust the zoom level may be performed by the user and/or defined by the user.

At block 310, the computing device 102 adjusts the user preferences based on the received user input. The adjusted user preferences may be stored, for example, locally in the computing device 102 and/or remotely in the computing system 112. In one or more implementations, the user preferences may be adjusted based on the content characteristics associated with a portion of the first web page that is being displayed on the display device when the user input is received. For example, if the user provided user input to increase the zoom level when the display device is displaying a portion of the first web page that includes an image depicting humans, the computing device 102 may associate increasing the zoom level for web pages with images containing humans and adjust the user preferences accordingly.

In a case where the first web page contains multiple content characteristics associated with high importance that need different zoom levels to be satisfied, a relative importance of the content characteristics may be utilized by the computing device 102 to set the first zoom level. For example, as discussed above with reference to block 220, the first web page may include text as well as images with human faces and the user may have preferences associated with the text and images. The computing device 102 may set the first zoom level such that as many as possible of the content characteristics associated with high importance are satisfied.

Adjustments to the user preferences, such as a relative importance between content characteristics, may be based on the feedback received from the user in regards to the first zoom level set by the computing device 102. For example, the relative importance between the content characteristics may be determined based on user input to the first zoom level set by the computing device 102. The computing device 102 may set the first zoom level such that the physical sizes of the text are generally greater than 2 millimeters but most of the human faces are less than 3 centimeters along all dimensions, as provided for display to the user. If the user input adjusts the first zoom level to the second zoom level such that the human faces are generally greater than 3 centimeters along at least one dimension, the computing device 102 may adjust the user preferences such that the importance associated with physical size of human faces as provided for display to the user is higher than the importance associated with physical size of text as provided for display to the user.

The adjustments to user preferences may involve matching content characteristics determined to be present or absent on the first web page with content characteristics determined to have been present or absent from web pages visited by the user prior to the visiting the first web page. Differences between the content characteristics (e.g., differences in presence or absence of content characteristics), along with user feedback that are associable with these differences, may allow a determination of the importance and relative importance to the content characteristics. Furthermore, the importance and relative importance, such as between physical size of text and physical size of human or animal faces in the examples above, may be fine-tuned based on subsequent web pages visited by the user and subsequent feedback received from the user. Similarly, the example range of 2 millimeters to 6 millimeters for the physical size of the text and/or the size of the human or animal faces preferred by the user may be fine-tuned based on subsequent web pages visited by the user and subsequent feedback received from the user.

At block 315, the computing device 102 receives a second set of web documents associated with a second web page. The second set of web documents may be received by the computing device 102 from a web host server associated with the second web page. The web host server may be the computing system 112 shown in FIG. 1 or another web host server not shown in FIG. 1. The web host server associated with the second web page may provide the second set of web documents to the computing device 102 upon the web host server receiving a request from the computing device 102 for the second web page. The second set of web documents may include HTML documents and associated style sheets (e.g., CSS sheets) that, when rendered by the web client application, allow display of the second web page.

At block 320, the computing device 102 determines content characteristics associated with the second web page based on the second set of web documents. The computing device 102 may determine these content characteristics in manners similar to those described above with reference to block 210.

At block 325, the computing device 102 sets a zoom level for displaying the second web page based on the content characteristics associated with the second web page and the adjusted user preferences. By utilizing the user preferences, which were adjusted based on the received user input at block 305, the computing device 102 adapts the zoom level that is set for displaying the second web page using the feedback provided by the user regarding the zoom level the computing device 102 set for displaying the first web page.

As the user visits additional web pages and provides feedback to zoom levels set by the computing device 102 for displaying these web pages, the computing device 102 may make additional adjustments to the user preferences based on received user input to adjust zoom levels set by the computing device 102 for displaying the web pages. As the computing device 102 becomes better able to set zoom levels with which the user is satisfied (e.g., no user input to adjust the set zoom levels), the user may adjust the zoom levels set by the computing device 102 less frequently.

In one or more implementations, the example processes 200 and 300 of FIGS. 2 and 3, respectively, may be performed for a portion of a web page. The computing device 102 determines the content characteristics for the portion of the web page, such as based on a DOM analysis of the portion of the web page, image content analysis of the portion of the web page, and so forth. The computing device 102 determines and sets a zoom level to be utilized for at least the portion of the web page based on the determined content characteristics for the portion of the web page and the user preferences. In some aspects, the computing device 102 may utilize this set zoom level for displaying the portion of the web page after the computing device 102 has determined the content characteristics for the entire web page.

In other aspects, the computing device may adjust (e.g., update) the zoom level for the portion of the web page after the computing device 102 has determined the content characteristics for the entire web page. For example, the zoom level set for the entire web page may be the zoom level that the computing device 102 determines would allow the user to view the entire web page without the user needing to adjust the zoom level when viewing any portion of the web page. In a case that the user is consuming content associated with a portion of the web page when the zoom level for the web page is adjusted (e.g., updated) by the computing device 102, the transition from one zoom level to another zoom level may be provided by a smooth animation from the content being displayed at one zoom level to the content being displayed at another zoom level.

According to embodiments of the invention, for a given display device associated with the computing device 102, the computing device 102 determines zoom levels for the web page such that different portions of the web page are set with different zoom levels. As an example, the portions may be based on the DOM representation of the web page, such as each portion being associated with one <div> element in an HTML document associated with the web page. As another example, the HTML document associated with the web page may embed content from other web pages, such as through the use of an <iframe> element for example. The computing device 102 may determine a respective zoom level for each of the portion(s) of the web page that contain content not associated with any embedded web page(s). The computing device 102 may detennine a respective zoom level for each of the portion(s) of the web page containing content associated with embedded web page(s), where, for example, each portion may be associated with one embedded web page. In some aspects, the computing device 102 may set the zoom level for the embedding web page and the zoom level for the embedded web page(s) such that a ratio between the zoom level for the embedding web page and the zoom level for the embedded web page(s) remains fixed. As another example, the portion may include whichever part of the web page is being displayed in a visible area of the display device, such as the portion of the web page visible in a view window associated with the web client application.

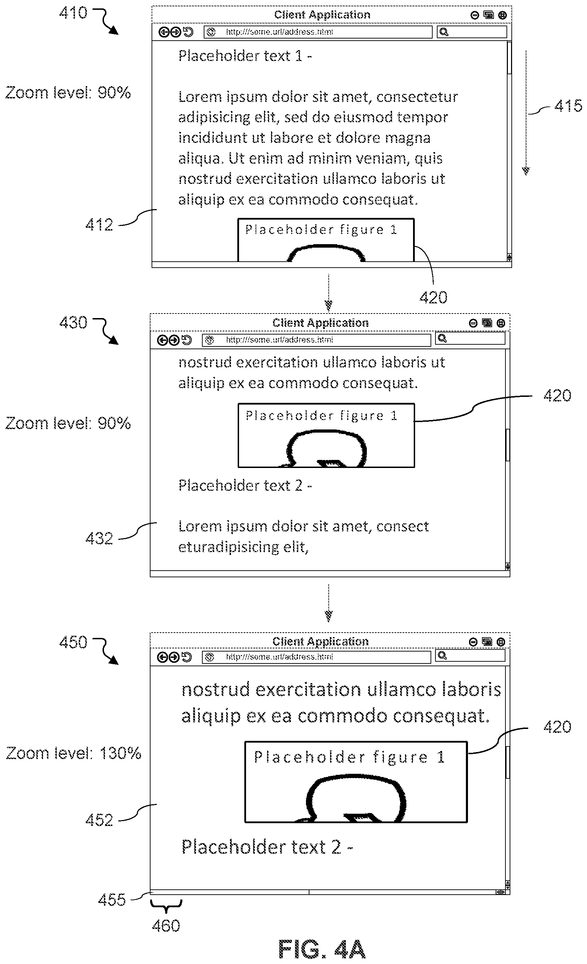

FIG. 4A shows a sequence of web client interfaces 410, 430, and 450 and their respective display areas 412, 432, and 452 on a display device associated with the computing device 102, that illustrates different zoom levels set for different portions of a web page, in accordance with one or more implementations. The web client interfaces 410, 430, and 450 are associated with the web client application executed in the computing device 102. The web client interfaces 410, 430, and 450 and their respective display areas 412, 432, and 452 may be displayed on the display device in a view window associated with the web client application.

A zoom level of 90% is set by the computing device 102 for a first portion of the web page based on content characteristics of the first portion of the web page and user preferences. The zoom level of 90% is set in the display area 412 of the web client interface 410. Consider that the user of the web client application performs downward scrolling 415 on the web client interface 410, such as through use of a swipe gesture (e.g., within the display area 412), a mouse (e.g., scroll wheel), a keyboard, among others. The computing device 102 receives an indication of the first portion of the web page being moved outside of a visible area of the window associated with the web client application. The content on the display device changes from the display area 412 of the web client interface 410 to the display area 432 of the web client interface 430 in response to the download downward scrolling 415. The user is generally provided with an animation of downward movement through the web page in transitioning from the display area 412 of the web client interface 410 to the display area 432 of the web client interface 430. The computing device 102 receives an indication of a second portion of the web page being moved into the visible area of the window.

The second portion of the web page may initially be displayed at the zoom level set for the first portion of the web page. The computing device 102 determines and sets a zoom level for displaying the second portion based on the content characteristics associated with the second portion and the user preferences. The computing device 102 then updates the zoom level set for displaying the second portion of the web page. A zoom level of 130% is set by the computing device 102 for the second portion of the web page. The zoom level of 130% is set in the display area 452 of the web client interface 450. The increase in the zoom level from 90% to 130% may be based on a user's preference to associate higher zoom levels for portions of a web page that contain images. In the display areas 412, 432, and 452, presence of an image 420 may cause the computing device 102 to increase the zoom level based on this user preference.

The transition from displaying the second portion of the web page using a zoom level of 90% to displaying the second portion using a zoom level of 130% of the web page may be provided by a smooth animation. In some aspects, the zoom level of 130% may be set for the second portion before the downward scrolling 415 is complete. In such aspects, the user may see the display area 412 transition to the display area 452 without first transitioning to the display area 432.

As shown in the web client interface 450, in increasing the zoom level in the display area 452, some content (e.g., text) near the right edge of the display area 432 is obscured in the display area 452, and a horizontal scroll bar 455 is being provided in the web client interface 450 to indicate presence of obscured content The web page may be panned to cause the obscured content to be within the visible area of the window associated with the web browser application. The user may pan to the right through tactile input, such as providing a rightward swipe gesture, pressing a right key on a keyboard, moving the horizontal scroll bar 455 (e.g., using a finger, stylus, mouse, etc.), and so forth.

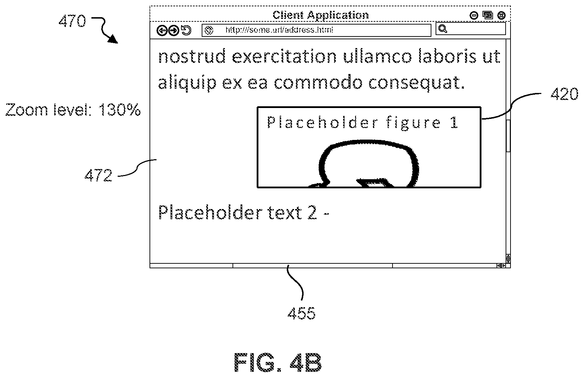

In embodiments of the invention, the computing device 102 horizontally pans the displayed portion of the web page to the right such that a white space 460 is outside of the view window and the previously obscured content of the web page is in the view window, as shown in a web client interface 470 with its associated display area 472 in FIG. 4B. The computing device 102 may transition from the display area 452 of the web client interface 450 to the display area 472 of the web client interface 470. The computing device 102 may transition from the display area 412 of the web client interface 410 straight to the display area 472 of the web client interface 470, such as when the computing device 102 sets the zoom level and performs the panning before the downward scrolling 415 is complete. The computing device 102 may perform the panning to remove the white space 460 based on a user's preference to remove white space from the view window when the window contains white space and some content of the web page is obscured.

In some aspects, the computing device 102 may include, or may be utilized with, voice recognition technologies that allow processing of verbal commands from the user. For example, the computing device 102 may include a microphone for accepting voice input from the user. The user's may provide verbal commands to cause panning the web page to the left or right and/or to cause adjusting of a zoom level for displaying the web page. The user may be provided with settings that allow turning on or off voice recognition.

In some aspects, the computing device 102 may include, or may be utilized with, eye tracking technologies that determine information associated with the user's gaze. For example, the computing device 102 may include a video camera that may determine information associated with the user's gaze. The gaze information may include, by way of non-limiting example, a position on the display device of the computing device 102 at which the user is determined to be looking and/or a direction from which the user is determined to be looking at the position. With the gaze information, the computing device 102 may pan the content of the web page. For example, the computing device 102 may not pan when the user is looking at content displayed at a center of the web client view window, whereas the computing device 102 may pan when the user's gaze moves to boundaries (e.g., left or right) of the web client view window. The user may be provided with settings that allow turning on or off eye tracking.

In one or more implementations, the web client application may reflow a web page each time the zoom level is adjusted. Reflow of the web page may include re-rendering the web page and re-calculating the content and layout of the content contained in the web page. In some aspects, the web client does not reflow the web page when the zoom level is changed. In such aspects, since increasing zoom level may cause some content of the web page to be obscured from a view window associated with the web client application, the user may need to pan the web page to cause the obscured content to be within the visible area of the view window. For example, the change in the zoom level may cause a left and/or right side of the web page to be obscured, and the user may need to pan the web page left or right in order to see the obscured content. In one or more implementations, the web client application may provide the user with a setting that allows the user to set whether or not the user would like web pages to be reflowed when the zoom level is adjusted. The user may provide different settings for different web pages.

Although the foregoing description has been made with reference to facilitating adaptive setting of zoom levels for displaying web pages by the computing device 102, the computing system 112 may facilitate adaptive setting of zoom levels for displaying web pages. The computing system 112 may perform one or more of the blocks shown in FIGS. 2 and 3. The computing system 112 may also determine different zoom levels for different portions of a web page and/or different zoom levels for different display devices associated with the computing device 102. The computing system 112 may also provide information associated with positioning of content, such as panning to make visible obscured content and/or reduce white space.

The computing system 112 may determine and set zoom levels for web pages based on content characteristics associated with the web pages and user preferences stored in the computing system 112. The computing system 112 may determine the content characteristics based on an analysis of the DOM of web documents associated with the web pages and/or an image content analysis. In some aspects, the computing system 112 may determine the content characteristics for a web page and provide the content characteristics to the computing device 102 when the computing device 102 visits the web page. In other aspects, the computing system 112 may provide information associated with the web page to the computing device 102, from which the computing device 102 may derive the content characteristics associated with the web page. The computing device 102 may save on resources utilized to process web documents associated with the web page to determine the content characteristics and/or store the content characteristics for example. Latency in displaying the web page may also be reduced.

In one or more implementations, the computing system 112 may be, or may be associated with, an email service and/or a social network service. The user preferences associated with zoom levels may be synchronized between the computing device 102 and the computing system 112, as well as any other computing devices and computing systems designated by the user. The user may be provided with options for setting whether a computing device is designated or not designated to be synchronized with the computing system 112. In a case of a shared or public computing device through which the user logs into a previously created account, the user preferences stored in the computing system 112 may be utilized by the shared or public computing device to set zoom levels for displaying web pages. However, the user may provide a setting such that the user preferences are not locally stored on the shared or public computing device.

In one or more implementations, the computing system 1.1.2 may provide or may be associated with a search engine service. In such aspects, the computing system 112 may request web pages from web host servers, determine content characteristics of the web pages (e.g., using DOM analysis, image content analysis, etc.), and store the determined content characteristics. The requests for the web documents, determining of the content characteristics, and storing of the content characteristics may be part of search engine indexing performed by the search engine service for example.

The content characteristics may be stored in local memory of the computing system 112 or memory accessible to the computing system 112, such as in a storage remote of or accessible to the computing system 112. The stored content characteristics may later be retrieved and provided to computing devices (e.g., 102-106) that request the web pages. The computing devices may then utilize the content characteristics received from the computing system 112. In some cases, the computing system 112 may determine information associated with the web page and provide the information to the computing device 102, from which the computing device 102 may derive the content characteristics associated with the web page for use in determining and setting zoom levels for displaying the web page. For example, the search engine service may provide the web pages in the search results along with information pertaining to the determined characteristics associated with the web pages. The stored content characteristics may be in a form of a DOM representation of the web pages for example. The computing devices may then utilize the stored content characteristics to set zoom levels for displaying the web pages.

In one or more implementations, when a computing device (e.g., 102) requests a web page from the computing system 110, the computing system 112 may determine whether content characteristics associated with the requested web page were previously stored. For example, when the user using the computing device 102 is logged into an online account (e.g., for an email account, social network account) associated with the computing system 112, a request for the web page by the computing device 102 may be detected by the computing system 112. Based on the detection of the request, the computing system 112 may request web documents associated with the web page from the computing system 110 and determine content characteristics associated with the web page based on the web documents.

In some aspects, if stored content characteristics for the web page exist, the computing system 112 may determine one or multiple zoom levels and provide them to the computing device 102. The zoom levels may be based on the stored content characteristics and user preferences associated with the user of the computing device 102. The user preferences may be stored by or otherwise accessible to the computing system 112 when the user is logged into the user account The computing system 112 may also store hardware characteristics associated with the computing device 102 as part of the user preferences. The hardware characteristics may include, for example, such as number of monitors, display size of the monitor(s), resolution of the monitor(s), etc., previously provided to the computing system 112 by the computing device 102.

In other aspects, if such stored content characteristics exist, the computing system 112 may provide the stored content characteristics to the computing device 102 to allow the computing device to determine and set one or multiple zoom levels associated with the web page. If such stored content characteristics are not present for the web page, the computing system 112 may determine the content characteristics, provide the determined content characteristics to the computing device 102, and store the determined content characteristics to be provided to computing devices in subsequent requests for the web page.

In one or more implementations, the subject technology allows a user to provide settings associated with setting zoom levels (e.g., by the computing device 102 or computing system 112) for displaying web pages. The user may turn on or off setting of zoom levels by the computing device 102 and/or computing system 112 for some or all web pages visited by the user. For example, the user may provide a blacklist of web pages for which the user desires to manually set the zoom level and/or a whitelist of web pages for which the user desires the computing device 102 to set zoom levels for viewing the web pages. For the web pages on the blacklist, the user may specify a default zoom level for viewing the web pages, where each web page may be associated with a respective default zoom level. The user may provide settings to turn on or off voice recognition and/or eye tracking. The user may provide settings regarding whether the computing device 102 or a remote service (e.g., provided by the computing system 112) determines and sets zoom levels for displaying the web pages. Other options for adjusting settings associated with setting zoom levels for displaying web pages may be provided to the user.

Although the foregoing description has been made with reference to facilitating adaptive and automatic setting of zoom levels for displaying web pages, the subject technology allows facilitating adaptive and automatic setting of zoom levels for displaying other application content aside from web pages. Accordingly, the foregoing description also applies to other application content. By way of non-limiting example, the subject technology may allow setting of zoom levels for displaying content in an application window associated with an application running on the computing devices 102-106. The application may be utilized in a web-based platform, such as a web client application, and/or on other platforms, such as a mobile application and a desktop application. In this regard, the application window may be associated with, for example, browser applications as described above as well as other types of applications, such as file management applications, document processing applications, word processing applications, image processing applications, among others.

Application content and/or layout thereof for the application may be partially or entirely retrieved from local memory of the computing devices 102-106 that are running the application. The application content may include, by way of non-limiting example, text, graphics, links, scripts, and so forth. The layout of the application content may include font type, size, and/or color and distribution thereof; paragraph and/or column layout; image location and/or size; white space location and/or amount; and so forth. The computing device 102 may determine content characteristics associated with the application content and/or layout thereof. The computing device 102 may set a zoom level for displaying the application content based on the determined content characteristics and the user preferences. The computing device 102 may set different zoom levels for different portions of the application content. The user preferences may be adjusted based on user feedback to the zoom level(s) set by the computing device 102.

For example, for a document containing text and/or image content, the computing device 102 may open the document using a word processing application. The computing device 102 may determine the content characteristics of the document and set a zoom level for displaying the document based on the determined content characteristics and the user preferences. As another example, for a user interface of a file management application, the computing device 102 may determine the content characteristics of the user interface and set a zoom level for displaying the user interface. The user interface may include folder icons, file icons, and any text associated with the folder and file icons. In some aspects, some or all of the user preferences utilized for setting zoom levels for displaying web pages may be utilized for setting zoom levels for displaying other application content, and vice versa. The user preferences associated with displaying other application content aside from web pages may be stored locally on the computing device 102 and/or remotely (e.g., on the computing system 112).

In one or more implementations, the user preferences determined based on interaction of the user with one application (e.g., a word processing application) may be utilized to set a zoom level for other applications (e.g., a file management application). For example, the user preferences obtained directly through user interaction with the word processing application, such as the user preparing a document using the word processing application, may be utilized in setting the zoom level for the file management application. As one example, if the user preferences indicate that the physical sizes of the text provided for display to the user by the word processing application is generally greater than 2 millimeters, the computing device 102 may cause the file management application to be set at a zoom level such that the physical sizes of the text provided for display to the user by the file management application is generally greater than 2 millimeters.

Alternatively or in addition, the user preferences determined based on interaction of the user with one application may be separate from the user preferences determined based on interaction of the user with another application. For example, whereas the user preferences determined based on user interaction with the word processing and file management applications may be shared between the applications to determine zoom level(s) for the applications, the user preferences determined based on user interaction with an image processing application may not be shared with the word processing and file management applications. In this regard, the zoom level(s) set for displaying content in the image processing application may not affect the zoom level(s) set for displaying content in the word processing application and file management application.

Such decoupling of the user preferences and/or zoom levels set between different applications may be based on feedback from the user. The user preferences associated with one application may diverge from the user preferences associated with another application. For example, the computing device 102 may determine that the user manually adjusts zoom levels in the image processing application based primarily on image content rather than textual content, whereas the computing device 102 may determine that the user manually adjusts zoom levels in the word processing application based primarily on textual content rather than image content.

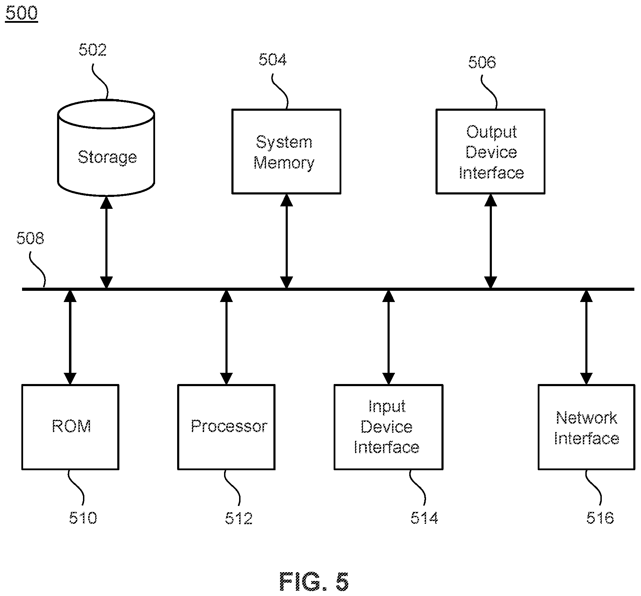

FIG. 5 conceptually illustrates an example electronic system 500 with which some implementations of the subject technology can be implemented. Electronic system 500 can be a computer, phone, PDA, or any other sort of electronic device. Such an electronic system includes various types of computer readable media and interfaces for various other types of computer readable media. The electronic system 500 may be any one of computing devices 102-106 and any one of computing systems 110-112 shown in FIG. 1. Electronic system 500 includes a bus 508, processing unit(s) 512, a system memory 504, a read-only memory (ROM) 510, a permanent storage device 502, an input device interface 514, an output device interface 506, and a network interface 516.

Bus 508 collectively represents all system, peripheral, and chipset buses that communicatively connect the numerous internal devices of electronic system 500. For instance, bus 508 communicatively connects processing unit(s) 512 with ROM 510, system memory 504, and permanent storage device 502.

From these various memory units, processing unit(s) 512 retrieves instructions to execute and data to process in order to execute the processes of the subject disclosure. The processing unit(s) can be a single processor or a multi-core processor in different implementations.

ROM 510 stores static data and instructions that are needed by processing unit(s) 512 and other modules of the electronic system. Permanent storage device 502, on the other hand, is a read-and-write memory device. This device is a non-volatile memory unit that stores instructions and data even when electronic system 500 is off. Some implementations of the subject disclosure use a mass-storage device (for example, a magnetic or optical disk and its corresponding disk drive) as permanent storage device 502.

Other implementations use a removable storage device (for example, a floppy disk, flash drive, and its corresponding disk drive) as permanent storage device 502. Like permanent storage device 502, system memory 504 is a read-and-write memory device. However, unlike storage device 502, system memory 504 is a volatile read-and-write memory, such as a random access memory. System memory 504 stores some of the instructions and data that the processor needs at runtime. In some implementations, the processes of the subject disclosure are stored in system memory 504, permanent storage device 502, or ROM 510. For example, the various memory units include instructions for facilitating adaptive setting of zoom levels for displaying application content, in accordance with some implementations. From these various memory units, processing unit(s) 512 retrieves instructions to execute and data to process in order to execute the processes of some implementations.

Bus 508 also connects to input and output device interfaces 514 and 506. Input device interface 514 enables the user to communicate information and select commands to the electronic system. Input devices used with input device interface 514 include, for example, alphanumeric keyboards and pointing devices (also called "cursor control devices"). Output device interfaces 506 enables, for example, the display of images generated by the electronic system 500. Output devices used with output device interface 506 include, for example, printers and display devices, for example, cathode ray tubes (CRT) or liquid crystal displays (LCD). Some implementations include devices, for example, a touchscreen that functions as both input and output devices.

Finally, as shown in FIG. 5, bus 508 also couples electronic system 500 to a network (not shown) through a network interface 516. In this manner, the computer can be a part of a network of computers (for example, a local area network (LAN), a wide area network (WAN), or an Intranet, or a network of networks, for example, the Internet Any or all components of electronic system 500 can be used in conjunction with the subject disclosure.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some implementations, multiple software aspects of the subject disclosure can be implemented as sub-parts of a larger program while remaining distinct software aspects of the subject disclosure. In some implementations, multiple software aspects can also be implemented as separate programs. Finally, any combination of separate programs that together implement a software aspect described here is within the scope of the subject disclosure. In some implementations, the software programs, when installed to operate on one or more electronic systems, define one or more specific machine implementations that execute and perform the operations of the software programs.

A computer program (also known as a program, software, software application, script, or code) can be written in any form of programming language, including compiled or interpreted languages, declarative or procedural languages, and it can be deployed in any form, including as a standalone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

These functions described above can be implemented in digital electronic circuitry, in computer software, firmware, or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some implementations include electronic components, for example, microprocessors, storage, and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic or solid state hard drives, read-only and recordable Blu-Ray® discs, ultra density optical discs, any other optical or magnetic media, and floppy disks. The computer-readable media can store a computer program that is executable by at least one processing unit and includes sets of instructions for performing various operations. Examples of computer programs or computer code include machine code, for example, is produced by a compiler, and files including higher-level code that are executed by a computer, an electronic component, or a microprocessor using an interpreter.

While the above discussion primarily refers to microprocessor or multi-core processors that execute software, some implementations are performed by one or more integrated circuits, for example, application specific integrated circuits (ASICs) or field programmable gate arrays (FPGAs). In some implementations, such integrated circuits execute instructions that are stored on the circuit itself.

As used in this specification and any claims of this application, the terms "computer", "server", "processor", and "memory" all refer to electronic or other technological devices. These terms exclude people or groups of people. For the purposes of the specification, the terms display or displaying means displaying on an electronic device. As used in this specification and any claims of this application, the terms "computer readable medium" and "computer readable media" are entirely restricted to tangible, physical objects that store information in a form that is readable by a machine or computer. A computer readable medium can be one or more computer readable media and a machine readable medium can be one or more machine readable media. These terms exclude any wireless signals, wired download signals, and any other ephemeral signals.

To provide for interaction with a user, implementations of the subject matter described in this specification can include usage of a computer having a display device, e.g., CRT or LCD monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

It is understood that any specific order or hierarchy of steps in the processes disclosed is an illustration of example approaches. Based upon design preferences, it is understood that the specific order or hierarchy of steps in the processes may be rearranged, or that all illustrated steps be performed. Some of the steps may be performed simultaneously. For example, in certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

As used herein, the phrase "at least one of' preceding a series of items, with the term "and" or "or" to separate any of the items, modifies the list as a whole, rather than each member of the list (i.e., each item). The phrase "at least one of' does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

Furthermore, to the extent that the term "include", "have", or the like is used in the description or the claims, such term is intended to be inclusive in a manner similar to the term "comprise" as "comprise" is interpreted when employed as a transitional word in a claim.

## Claims

1. A system, comprising:
one or more processors; and
a non-transitory machine-readable medium comprising instructions stored therein, which when executed by the one or more processors, cause the one or more processors to perform operations comprising:
determining (210) content characteristics associated with a first application content;
determining user preferences (215) associated with zoom levels; and
setting (220) a first zoom level for displaying at least a first portion of the first application content based on the content characteristics of the first portion of the first application content and the user preferences, and
providing for display the first portion of the first application content at the first zoom level in a visible area of the view window of a first application;
while scrolling downward (415) in the view window (410) of the first application,
receiving an indication of the first portion of the first application content being moved outside of the visible area of the view window;
receiving an indication of a second portion of the first application content being moved into the visible area of the view window, and
setting the first zoom level to a second zoom level for displaying the second portion of the first application content based on the content characteristics associated with the second portion of the first application content and the user preferences;
displaying the second portion of the first application content in the view window at the second zoom level; and
when the view window contains whitespace (460) on one side of the visible area and some content of the displayed portion of the first application content on the opposite side is obscured from the view window (452), horizontally panning (460) the displayed portion of the first application content so that the whitespace is removed from the view window and the obscured content becomes visible in the view window (472).

2. The system of claim 1, wherein the operations further comprise:
after providing for display the portion of the first application content at the second zoom level;
receiving user input to adjust the second zoom level to a third zoom level;
adjusting the user preferences based on the received user input;
wherein the operations preferably further comprise:
determining content characteristics associated with a second application content; and
setting a fourth zoom level for at least a first portion of the second application content based on the content characteristics associated with the second application content and the adjusted user preferences; and
wherein the first application content is preferably associated with a first application and the second application content is associated with a second application.

3. The system of claim 2, further comprising:
determining content characteristics associated with the portion of the first application content in response to receiving the user input,
wherein the user preferences are adjusted based on the content characteristics associated with the portion of the first application content.

4. The system of claim 1, wherein the operations further comprise:
providing for display the first portion of the first application content at the first zoom level on a display device associated with the system, wherein the user preferences comprise one or more characteristics associated with the display device.

5. The system of claim 1, wherein the operations further comprise:
setting a third zoom level for displaying at least the first portion of the first application content based on the content characteristics and the user preferences,
wherein:
the second zoom level is different from the third zoom level,
the user preferences comprise one or more characteristics associated with a first display device associated with the system and one or more characteristics associated with a second display device associated with the system,
the second zoom level is for displaying at least the second portion of the first application content on the first display device and is based on the one or more characteristics associated with the first display device, and
the third zoom level is for displaying at least the first portion of the first application content on the second display device and is based on the one or more characteristics associated with the second display device.

6. The system of claim 1, wherein determining the user preferences comprises retrieving the user preferences associated with zoom levels from a server.

7. The system of claim 1, wherein the operations further comprise:
receiving the first application content, the first application content comprising a set of web documents associated with a web page; and
determining a document object model, DOM, representation associated with the set of web documents, wherein the content characteristics are determined based at least on the DOM representation.

8. A computer-implemented method, comprising:
determining content characteristics associated with a first application content;
determining user preferences associated with zoom levels;
setting a first zoom level for displaying at least a first portion of the first application content based on the content characteristics of the first portion of the first application content and the user preferences; and providing for display the first portion of the first application content at the first zoom level in a visible area of the view window of a first application;
while scrolling downward in the view window of the first application,
receiving an indication of the first portion of the first application content being moved outside of the visible area of the view window;
receiving an indication of a second portion of the first application content being moved into the visible area of the view window, and
setting the first zoom level to a second zoom level for displaying the second portion of the first application content based on the content characteristics associated with the second portion of the first application content and the user preferences;
displaying the second portion of the first application content in the view window at the second zoom level; and
when the view window contains whitespace on one side of the visible area and some content of the displayed portion of the first application content on the opposite side is obscured from the view window, horizontally panning the displayed portion of the first application content so that the whitespace is removed from the view window and the obscured content becomes visible in the view window.

9. The method of claim 8, further comprising:
after providing for display a portion of the first application content at the first zoom level in an application executed on a computing device;
receiving user input to adjust the first zoom level to a third zoom level;
adjusting the user preferences based on the received user input;
wherein the method preferably further comprises:
determining content characteristics associated with a second application content; and
setting a fourth zoom level for at least a portion of the second application content based on the content characteristics associated with the second application content and the adjusted user preferences.

10. The method of claim 8, wherein the content characteristics comprise a distribution associated with textual content and image content of the first application content.

11. The method of claim 8, further comprising detecting one or more objects represented in image content of the first application content, wherein the content characteristics is further based on detecting the one or more objects.

12. A non-transitory machine-readable medium comprising instructions stored therein, which when executed by a machine, cause the machine to perform operations comprising:
determining content characteristics associated with a first application content;
determining user preferences associated with zoom levels; and
setting a first zoom level for displaying at least a first portion of the first application content based on the content characteristics of the first portion of the first application content and the user preferences; and providing for display the first portion of the first application content at the first zoom level in a visible area of the view window of a first application;
while scrolling downward in the view window of the first application,
receiving an indication of the first portion of the first application content being moved outside of the visible area of the view window;
receiving an indication of a second portion of the first application content being moved into the visible area of the view window, and
setting the first zoom level to a second zoom level for displaying the second portion of the first application content based on the content characteristics associated with the second portion of the first application content and the user preferences;
displaying the second portion of the first application content in the view window at the second zoom level; and
when the view window contains whitespace on one side of the visible area and some content of the displayed portion of the first application content on the opposite side is obscured from the view window, horizontally panning the displayed portion of the first application content so that the whitespace is removed from the view window and the obscured content becomes visible in the view window.

13. The non-transitory machine-readable medium of claim 12, wherein the operations further comprise:
after providing for display the portion of the first application content;
receiving user input to adjust the second zoom level to a third zoom level;
adjusting the user preferences based on the received user input;
wherein the operations preferably further comprise:
receiving a second set of application content;
determining content characteristics associated with the second application content; and
setting a fourth zoom level for at least a portion of the second application content based on the content characteristics associated with the second application content and the adjusted user preferences;

14. The non-transitory machine-readable medium of claim 13, wherein the operations further comprise:
providing for display a second portion of the first application content at the first zoom level in a visible area, wherein the visible area is of a window of a web client; and
determining content characteristics associated with the second portion of the first application content,
wherein the user preferences are adjusted based on the content characteristics associated with the second portion of the first application content.

## Patentansprüche

1. System, umfassend:
einen oder mehrere Prozessoren; und
ein nicht-transitorisches maschinenlesbares Medium, das darin gespeicherte Anweisungen umfasst, die, wenn sie von dem einen oder den mehreren Prozessoren ausgeführt werden, den einen oder die mehreren Prozessoren veranlassen, Operationen durchzuführen, die Folgendes umfassen:
Bestimmen (210) von Inhaltsmerkmalen, die mit einem ersten Anwendungsinhalt assoziiert sind;
Bestimmen von Benutzerpräferenzen (215), die mit Zoomstufen assoziiert sind; und
Einstellen (220) einer ersten Zoomstufe zum Anzeigen mindestens eines ersten Teils des ersten Anwendungsinhalts basierend auf den Inhaltsmerkmalen des ersten Teils des ersten Anwendungsinhalts und den Benutzerpräferenzen, und
Bereitstellen zum Anzeigen des ersten Teils des ersten Anwendungsinhalts mit der ersten Zoomstufe in einem sichtbaren Bereich des Ansichtsfensters einer ersten Anwendung;
während eines Scrollens nach unten gerichtet (415) in dem Ansichtsfenster (410) der ersten Anwendung,
Empfangen einer Angabe, dass der erste Teil des ersten Anwendungsinhalts aus dem sichtbaren Bereich des Ansichtsfensters verschoben wurde;
Empfangen einer Angabe, dass ein zweiter Teil des ersten Anwendungsinhalts in den sichtbaren Bereich des Ansichtsfensters bewegt wurde, und
Einstellen der ersten Zoomstufe auf eine zweite Zoomstufe zum Anzeigen des zweiten Teils des ersten Anwendungsinhalts basierend auf den Inhaltsmerkmalen, die mit dem zweiten Teil des ersten Anwendungsinhalts assoziiert sind, und den Benutzerpräferenzen;
Anzeigen des zweiten Teils des ersten Anwendungsinhalts in dem Ansichtsfenster mit der zweiten Zoomstufe; und
wenn das Ansichtsfenster Leerraum (460) auf einer Seite des sichtbaren Bereichs enthält und einiges an Inhalt des angezeigten Teils des ersten Anwendungsinhalts auf der gegenüberliegenden Seite von dem Ansichtsfenster (452) verdeckt ist, horizontales Schwenken (460) des angezeigten Teils des ersten Anwendungsinhalts, so dass der Leerraum von dem Ansichtsfenster entfernt wird und der verdeckte Inhalt in dem Ansichtsfenster (472) sichtbar wird.

2. System nach Anspruch 1, wobei die Operationen ferner umfassen:
nach einem Bereitstellen zur Anzeige des Teils des ersten Anwendungsinhalts auf der zweiten Zoomstufe:
Empfangen einer Benutzereingabe, um die zweite Zoomstufe auf eine dritte Zoomstufe anzupassen;
Anpassen der Benutzerpräferenzen basierend auf der empfangenen Benutzereingabe;
wobei die Operationen vorzugsweise ferner umfassen:
Bestimmen von Inhaltsmerkmalen, die mit einem zweiten Anwendungsinhalt assoziiert sind; und
Einstellen einer vierten Zoomstufe für mindestens einen ersten Teil des zweiten Anwendungsinhalts basierend auf den Inhaltsmerkmalen, die mit dem zweiten Anwendungsinhalt assoziiert sind, und den angepassten Benutzerpräferenzen; und
wobei der erste Anwendungsinhalt vorzugsweise mit einer ersten Anwendung assoziiert ist und der zweite Anwendungsinhalt mit einer zweiten Anwendung assoziiert ist.

3. System nach Anspruch 2, ferner umfassend:
Bestimmen von Inhaltsmerkmalen, die mit dem Teil des ersten Anwendungsinhalts assoziiert sind, als Antwort auf Empfangen der Benutzereingabe,
wobei die Benutzerpräferenzen basierend auf den Inhaltsmerkmalen, die mit dem Teil des ersten Anwendungsinhalts assoziiert sind, angepasst werden.

4. System nach Anspruch 1, wobei die Operationen ferner umfassen:
Bereitstellen zur Anzeige des ersten Teils des ersten Anwendungsinhalts mit der ersten Zoomstufe auf einer mit dem System assoziierten Anzeigevorrichtung, wobei die Benutzerpräferenzen ein oder mehrere mit der Anzeigevorrichtung assoziierte Merkmale umfassen.

5. System nach Anspruch 1, wobei die Operationen ferner umfassen:
Einstellen einer dritten Zoomstufe zum Anzeigen zumindest des ersten Teils des ersten Anwendungsinhalts basierend auf den Inhaltsmerkmalen und den Benutzerpräferenzen,
wobei:
die zweite Zoomstufe von der dritten Zoomstufe verschieden ist,
die Benutzerpräferenzen eine oder mehrere Merkmale umfassen, die mit einer ersten, dem System zugeordneten Anzeigevorrichtung assoziiert sind, und eine oder mehrere Merkmalen, die mit einer zweiten, dem System zugeordneten Anzeigevorrichtung assoziiert sind,
die zweite Zoomstufe zum Anzeigen mindestens des zweiten Teils des ersten Anwendungsinhalts auf der ersten Anzeigevorrichtung dient und auf dem einen oder den mehreren Merkmalen basiert, die mit der ersten Anzeigevorrichtung assoziiert sind, und
die dritte Zoomstufe zum Anzeigen zumindest des ersten Teils des ersten Anwendungsinhalts auf der zweiten Anzeigevorrichtung dient und auf dem einen oder mehreren Merkmalen basiert, die mit der zweiten Anzeigevorrichtung assoziiert sind.

6. System nach Anspruch 1, wobei ein Bestimmen der Benutzerpräferenzen ein Abrufen der Benutzerpräferenzen, die mit Zoomstufen assoziiert sind, von einem Server umfasst.

7. System nach Anspruch 1, wobei die Operationen ferner umfassen:
Empfangen des ersten Anwendungsinhalts, wobei der erste Anwendungsinhalt eine Menge von Webdokumenten umfasst, die mit einer Webseite assoziiert sind; und
Bestimmen einer Dokumentenobjektmodell-, DOM-, Darstellung, die mit der Menge von Webdokumenten assoziiert ist, wobei die Inhaltsmerkmale zumindest basierend auf der DOM-Darstellung bestimmt werden.

8. Computerimplementiertes Verfahren, umfassend:
Bestimmen von Inhaltsmerkmalen, die mit einem ersten Anwendungsinhalt assoziiert sind;
Bestimmen von Benutzerpräferenzen, die mit Zoomstufen assoziiert sind;
Einstellen einer ersten Zoomstufe zum Anzeigen mindestens eines ersten Teils des ersten Anwendungsinhalts basierend auf den Inhaltsmerkmalen des ersten Teils des ersten Anwendungsinhalts und den Benutzerpräferenzen; und Bereitstellen zum Anzeigen des ersten Teils des ersten Anwendungsinhalts mit der ersten Zoomstufe in einem sichtbaren Bereich des Ansichtsfensters einer ersten Anwendung;
während eines Scrollens nach unten gerichtet in dem Ansichtsfenster der ersten Anwendung,
Empfangen einer Angabe, dass der erste Teil des ersten Anwendungsinhalts aus dem sichtbaren Bereich des Ansichtsfensters verschoben wurde;
Empfangen einer Angabe, dass ein zweiter Teil des ersten Anwendungsinhalts in den sichtbaren Bereich des Ansichtsfensters bewegt wurde, und
Einstellen der ersten Zoomstufe auf eine zweite Zoomstufe zum Anzeigen des zweiten Teils des ersten Anwendungsinhalts basierend auf den Inhaltsmerkmalen, die mit dem zweiten Teil des ersten Anwendungsinhalts assoziiert sind, und den Benutzerpräferenzen;
Anzeigen des zweiten Teils des ersten Anwendungsinhalts in dem Ansichtsfenster mit der zweiten Zoomstufe; und
wenn das Ansichtsfenster Leerraum auf einer Seite des sichtbaren Bereichs enthält und einigen Inhalt des angezeigten Teils des ersten Anwendungsinhalts auf der gegenüberliegenden Seite von dem Ansichtsfenster verdeckt ist, horizontales Schwenken des angezeigten Teils des ersten Anwendungsinhalts, so dass der Leerraum von dem Ansichtsfenster entfernt wird und der verdeckte Inhalt in dem Ansichtsfenster sichtbar wird.

9. Verfahren nach Anspruch 8, ferner umfassend:
nach Bereitstellen zur Anzeige eines Teils des ersten Anwendungsinhalts mit der ersten Zoomstufe in einer auf einer Computervorrichtung ausgeführten Anwendung,
Empfangen einer Benutzereingabe, um die erste Zoomstufe auf eine dritte Zoomstufe anzupassen;
Anpassen der Benutzerpräferenzen basierend auf der empfangenen Benutzereingabe;
wobei das Verfahren vorzugsweise ferner umfasst:
Bestimmen von Inhaltsmerkmalen, die mit einem zweiten Anwendungsinhalt assoziiert sind; und
Einstellen einer vierten Zoomstufe für mindestens einen ersten Teil des zweiten Anwendungsinhalts basierend auf den Inhaltsmerkmalen, die mit dem zweiten Anwendungsinhalt assoziiert sind, und den angepassten Benutzerpräferenzen.

10. Verfahren nach Anspruch 8, wobei die Inhaltsmerkmale eine Verteilung umfassen, die mit Textinhalten und Bildinhalten des ersten Anwendungsinhalts assoziiert ist.

11. Verfahren nach Anspruch 8, ferner umfassend ein Erfassen eines oder mehrerer Objekte, die in einem Bildinhalt des ersten Anwendungsinhalts dargestellt sind, wobei die Inhaltsmerkmale ferner auf einem Erfassen des einen oder der mehreren Objekte basieren.

12. Nicht-transitorisches, maschinenlesbares Medium, das darin gespeicherte Anweisungen umfasst, die, wenn sie von einer Maschine ausgeführt werden, die Maschine veranlassen, Operationen durchzuführen, die Folgendes umfassen:
Bestimmen von Inhaltsmerkmalen, die mit einem ersten Anwendungsinhalt assoziiert sind;
Bestimmen von Benutzerpräferenzen, die mit Zoomstufen assoziiert sind; und
Einstellen einer ersten Zoomstufe zum Anzeigen mindestens eines ersten Teils des ersten Anwendungsinhalts basierend auf den Inhaltsmerkmalen des ersten Teils des ersten Anwendungsinhalts und den Benutzerpräferenzen; und Bereitstellen zum Anzeigen des ersten Teils des ersten Anwendungsinhalts mit der ersten Zoomstufe in einem sichtbaren Bereich des Ansichtsfensters einer ersten Anwendung;
während eines Scrollens nach unten gerichtet in dem Ansichtsfenster der ersten Anwendung,
Empfangen einer Angabe, dass der erste Teil des ersten Anwendungsinhalts aus dem sichtbaren Bereich des Ansichtsfensters verschoben wurde;
Empfangen einer Angabe, dass ein zweiter Teil des ersten Anwendungsinhalts in den sichtbaren Bereich des Ansichtsfensters bewegt wurde, und
Einstellen der ersten Zoomstufe auf eine zweite Zoomstufe zum Anzeigen des zweiten Teils des ersten Anwendungsinhalts basierend auf den Inhaltsmerkmalen, die mit dem zweiten Teil des ersten Anwendungsinhalts assoziiert sind, und den Benutzerpräferenzen;
Anzeigen des zweiten Teils des ersten Anwendungsinhalts in dem Ansichtsfenster mit der zweiten Zoomstufe; und
wenn das Ansichtsfenster Leerraum auf einer Seite des sichtbaren Bereichs enthält und einiger Inhalt des angezeigten Teils des ersten Anwendungsinhalts auf der gegenüberliegenden Seite von dem Ansichtsfenster verdeckt ist, horizontales Schwenken des angezeigten Teils des ersten Anwendungsinhalts, so dass der Leerraum von dem Ansichtsfenster entfernt wird und der verdeckte Inhalt in dem Ansichtsfenster sichtbar wird.

13. Nicht-transitorisches, maschinenlesbares Medium nach Anspruch 12, wobei die Operationen ferner umfassen:
nach einem Bereitstellen zur Anzeige des Teils des ersten Anwendungsinhalts,
Empfangen einer Benutzereingabe, um die zweite Zoomstufe auf eine dritte Zoomstufe anzupassen;
Anpassen der Benutzerpräferenzen basierend auf der empfangenen Benutzereingabe;
wobei die Operationen vorzugsweise ferner umfassen:
Empfangen eines zweiten Anwendungsinhalts;
Bestimmen von Inhaltsmerkmalen, die mit dem zweiten Anwendungsinhalt assoziiert sind; und
Einstellen einer vierten Zoomstufe für mindestens einen Teil des zweiten Anwendungsinhalts basierend auf den mit dem zweiten Anwendungsinhalt assoziierten Inhaltsmerkmalen und den angepassten Benutzerpräferenzen;

14. Nicht-transitorisches maschinenlesbares Medium nach Anspruch 13, wobei die Operationen ferner umfassen:
Bereitstellen zur Anzeige eines zweiten Teils des ersten Anwendungsinhalts auf der ersten Zoomstufe in einem sichtbaren Bereich, wobei der sichtbare Bereich ein Fenster eines Webclients ist; und
Bestimmen von Inhaltsmerkmalen, die mit dem zweiten Teil des ersten Anwendungsinhalts assoziiert sind,
wobei die Benutzerpräferenzen basierend auf den Inhaltsmerkmalen, die mit dem zweiten Teil des ersten Anwendungsinhalts assoziiert sind, angepasst werden.

## Revendications

1. Un système comprenant :
un ou plusieurs processeurs ; et
un support non transitoire lisible par machine comprenant des instructions stockées en lui, qui, lorsqu'elles sont exécutées par lesdits un ou plusieurs processeurs, amènent lesdits un ou plusieurs processeurs à effectuer des opérations comprenant :
le fait (210) de déterminer des caractéristiques de contenu associées à un premier contenu d'application ;
le fait de déterminer des préférences de l'utilisateur (215) associées à des niveaux de zoom ; et
le fait (220) de définir un premier niveau de zoom pour afficher au moins une première partie du premier contenu d'application en fonction des caractéristiques de contenu de la première partie du premier contenu d'application et des préférences de l'utilisateur, et
le fait de permettre l'affichage de la première partie du premier contenu d'application au premier niveau de zoom dans une zone visible de la fenêtre de visualisation d'une première application ;
lors d'un défilement vers le bas (415) dans la fenêtre de visualisation (410) de la première application,
le fait de recevoir une indication de ce que la première partie du premier contenu d'application est déplacée en dehors de la zone visible de la fenêtre de visualisation ;
le fait de recevoir une indication de ce qu'une deuxième partie du premier contenu d'application est déplacée dans la zone visible de la fenêtre de visualisation, et
le fait de régler le premier niveau de zoom à un deuxième niveau de zoom pour afficher la deuxième partie du premier contenu d'application en fonction des caractéristiques de contenu associées à la deuxième partie du premier contenu d'application et des préférences de l'utilisateur ;
le fait d'afficher la deuxième partie du premier contenu d'application dans la fenêtre de visualisation au deuxième niveau de zoom ; et
lorsque la fenêtre de visualisation contient des espaces blancs (460) sur un côté de la zone visible et qu'un certain contenu de la partie affichée du premier contenu d'application sur le côté opposé est masqué par rapport à la fenêtre de visualisation (452), le fait (460) de mettre en panorama horizontal la partie affichée du premier contenu d'application de sorte que l'espace blanc soit supprimé de la fenêtre de visualisation et que le contenu masqué devienne visible dans la fenêtre de visualisation (472).

2. Le système selon la revendication 1, dans lequel les opérations comprennent en outre :
après avoir permis l'affichage de la partie du premier contenu d'application au deuxième niveau de zoom :
le fait de recevoir une entrée utilisateur pour régler le deuxième niveau de zoom à un troisième niveau de zoom ;
le fait de régler les préférences de l'utilisateur en fonction de l'entrée utilisateur reçue ;
les opérations comprenant en outre de préférence :
le fait de déterminer des caractéristiques de contenu associées à un deuxième contenu d'application ; et
le fait de définir un quatrième niveau de zoom pour au moins une première partie du deuxième contenu d'application en fonction des caractéristiques de contenu associées au deuxième contenu d'application et des préférences utilisateur réglées ; et
le premier contenu d'application étant de préférence associé à une première application et le deuxième contenu d'application étant associé à une deuxième application.

3. Le système selon la revendication 2, comprenant en outre :
le fait de déterminer des caractéristiques de contenu associées à la partie du premier contenu d'application en réponse à la réception de l'entrée utilisateur,
les préférences de l'utilisateur étant réglées sur la base des caractéristiques de contenu associées à la partie du premier contenu d'application.

4. Le système selon la revendication 1, dans lequel les opérations comprennent en outre :
le fait de permettre d'afficher la première partie du premier contenu d'application au premier niveau de zoom sur un dispositif d'affichage associé au système, les préférences de l'utilisateur comprenant une ou plusieurs caractéristiques associées au dispositif d'affichage.

5. Le système selon la revendication 1, dans lequel les opérations comprennent en outre :
le fait de définir un troisième niveau de zoom pour afficher au moins la première partie du premier contenu d'application en fonction des caractéristiques du contenu et des préférences de l'utilisateur,
le deuxième niveau de zoom étant différent du troisième niveau de zoom,
les préférences de l'utilisateur comprenant une ou plusieurs caractéristiques associées à un premier dispositif d'affichage associé au système et une ou plusieurs caractéristiques associées à un deuxième dispositif d'affichage associé au système,
le deuxième niveau de zoom étant destiné à l'affichage d'au moins la deuxième partie du premier contenu d'application sur le premier dispositif d'affichage et étant basé sur lesdites une ou plusieurs caractéristiques associées au premier dispositif d'affichage, et
le troisième niveau de zoom étant destiné à l'affichage d'au moins la première partie du premier contenu d'application sur le deuxième dispositif d'affichage et est basé sur lesdites une ou plusieurs caractéristiques associées au deuxième dispositif d'affichage.

6. Le système selon la revendication 1, dans lequel la détermination des préférences de l'utilisateur comprend le fait de récupérer les préférences de l'utilisateur associées aux niveaux de zoom depuis un serveur.

7. Le système selon la revendication 1, dans lequel les opérations comprennent en outre :
le fait de recevoir le premier contenu d'application, le premier contenu d'application comprenant un ensemble de documents web associé à une page web ; et
le fait de déterminer une représentation d'un modèle objet de document, ci-après DOM, associée à l'ensemble de documents Web, les caractéristiques du contenu étant déterminées sur la base au moins de la représentation DOM.

8. Un procédé mis en œuvre par ordinateur, comprenant :
le fait de déterminer des caractéristiques de contenu associées à un premier contenu d'application ;
le fait de déterminer des préférences de l'utilisateur associées à des niveaux de zoom ;
le fait de définir un premier niveau de zoom pour afficher au moins une première partie du premier contenu d'application en fonction des caractéristiques de contenu de la première partie du premier contenu d'application et des préférences de l'utilisateur ; et
le fait de permettre l'affichage de la première partie du premier contenu d'application au premier niveau de zoom dans une zone visible de la fenêtre de visualisation d'une première application ;
lors d'un défilement vers le bas dans la fenêtre de visualisation de la première application,
le fait de recevoir une indication de ce que la première partie du premier contenu d'application est déplacée en dehors de la zone visible de la fenêtre de visualisation ;
le fait de recevoir une indication de ce qu'une deuxième partie du premier contenu d'application est déplacée dans la zone visible de la fenêtre de visualisation, et
le fait de régler le premier niveau de zoom à un deuxième niveau de zoom pour afficher la deuxième partie du premier contenu d'application en fonction des caractéristiques de contenu associées à la deuxième partie du premier contenu d'application et des préférences de l'utilisateur ;
le fait d'afficher la deuxième partie du premier contenu d'application dans la fenêtre de visualisation au deuxième niveau de zoom ; et
lorsque la fenêtre de visualisation contient des espaces blancs sur un côté de la zone visible et qu'un certain contenu de la partie affichée du premier contenu d'application sur le côté opposé est masqué à partir de la fenêtre de visualisation, le fait de mettre en panorama horizontal la partie affichée du premier contenu d'application de sorte que l'espace blanc soit supprimé de la fenêtre de visualisation et que le contenu masqué devient visible dans la fenêtre de visualisation.

9. Le procédé selon la revendication 8, comprenant en outre :
après avoir permis l'affichage d'une partie du premier contenu d'application au premier niveau de zoom dans une application exécutée sur un dispositif informatique :
le fait de recevoir une saisie utilisateur pour régler le premier niveau de zoom à un troisième niveau de zoom :
le fait de régler les préférences de l'utilisateur en fonction de l'entrée utilisateur reçue ;
le procédé comprenant en outre de préférence :
le fait de déterminer des caractéristiques de contenu associées à un deuxième contenu d'application ; et
le fait de définir un quatrième niveau de zoom pour au moins une partie du deuxième contenu d'application en fonction des caractéristiques de contenu associées au deuxième contenu d'application et des préférences utilisateur réglées.

10. Le procédé selon la revendication 8, dans lequel les caractéristiques de contenu comprennent une distribution associée au contenu textuel et au contenu d'image du premier contenu d'application.

11. Le procédé selon la revendication 8, comprenant en outre le fait de détecter un ou plusieurs objets représentés dans le contenu image du premier contenu d'application, les caractéristiques du contenu étant en outre basées sur la détection desdits un ou plusieurs objets.

12. Un support non transitoire lisible par machine comprenant des instructions stockées sur lui, qui, lorsqu'elles sont exécutées par une machine, amènent la machine à effectuer des opérations comprenant :
le fait de déterminer des caractéristiques de contenu associées à un premier contenu d'application ;
le fait de déterminer des préférences de l'utilisateur associées à des niveaux de zoom ; et
le fait de définir un premier niveau de zoom pour afficher au moins une première partie du premier contenu d'application en fonction des caractéristiques de contenu de la première partie du premier contenu d'application et des préférences de l'utilisateur ; et de permettre l'affichage de la première partie du premier contenu d'application au premier niveau de zoom dans une zone visible de la fenêtre de visualisation d'une première application ;
lors d'un défilement vers le bas dans la fenêtre de visualisation de la première application,
le fait de recevoir une indication de ce que la première partie du premier contenu d'application est déplacée hors de la zone visible de la fenêtre de visualisation ;
le fait de recevoir une indication de ce qu'une deuxième partie du premier contenu d'application est déplacée dans la zone visible de la fenêtre de visualisation, et
le fait de régler le premier niveau de zoom à un deuxième niveau de zoom pour afficher la deuxième partie du premier contenu d'application en fonction des caractéristiques de contenu associées à la deuxième partie du premier contenu d'application et des préférences de l'utilisateur ;
le fait d'afficher la deuxième partie du premier contenu d'application dans la fenêtre de visualisation au deuxième niveau de zoom ; et
lorsque la fenêtre de visualisation contient des espaces blancs sur un côté de la zone visible et qu'un certain contenu de la partie affichée du premier contenu d'application sur le côté opposé est masqué à partir de la fenêtre de visualisation, le fait de mettre en panorama horizontal la partie affichée du premier contenu d'application afin que l'espace blanc soit supprimé de la fenêtre de visualisation et que le contenu masqué devient visible dans la fenêtre de visualisation.

13. Le support non transitoire lisible par machine selon la revendication 12, dans lequel les opérations comprennent en outre :
après avoir permis l'affichage de la partie du premier contenu d'application :
le fait de recevoir une entrée utilisateur pour régler le deuxième niveau de zoom à un troisième niveau de zoom ;
le fait de régler les préférences de l'utilisateur en fonction de l'entrée utilisateur reçue ;
les opérations comprenant en outre de préférence :
le fait de recevoir un deuxième ensemble de contenus d'applications ;
le fait de déterminer des caractéristiques de contenu associées au deuxième contenu d'application ; et
le fait de définir un quatrième niveau de zoom pour au moins une partie du deuxième contenu d'application en fonction des caractéristiques de contenu associées au deuxième contenu d'application et des préférences utilisateur réglées.

14. Le support non transitoire lisible par machine selon la revendication 13, dans lequel les opérations comprennent en outre :
le fait de permettre l'affichage d'une deuxième partie du premier contenu d'application au premier niveau de zoom dans une zone visible, la zone visible étant celle d'une fenêtre d'un client Web ; et
le fait de déterminer des caractéristiques de contenu associées à la deuxième partie du premier contenu d'application,
les préférences de l'utilisateur étant réglées sur la base des caractéristiques de contenu associées à la deuxième partie du premier contenu d'application.
